# DEMANDE DE BREVET EUROPEEN

(11) **EP 4 579 991 A1**
(43) Date de publication de la demande: **02.07.2025**
(21) Numéro de dépôt: 24222215.6
(22) Date de dépôt: 20.12.2024
(51) Int. Cl.: H02J 7/00, H01M 50/509

(54) **ENSEMBLE D ÉLÉMENTS ÉLECTROCHIMIQUES À CIRCULATION DE COURANT OPTIMISÉE ET BATTERIE ASSOCIÉ**

(30) Priorité: 21.12.2023 FR 2314871
(71) Demandeur: SAFT, 92300 Levallois-Perret (FR)
(72) Inventeur: AUGUIN, Florian, 33770 SALLES (FR)
(74) Mandataire: Lavoix

(57) **Abrégé**

L'ensemble comporte des blocs (18) d'éléments électrochimiques (12) connectés électriquement en série de la façon suivante :
- les blocs (18) de la i-ième ligne (16) de K colonnes (14) sont connectés électriquement entre eux en série, les blocs (18) de la i-ième ligne formant un i-ième groupe (22) de blocs (18) d'éléments électrochimiques (12) de la i-ième ligne ;
- pour chaque i-ème ligne, chaque bloc (18) de ladite ligne des colonnes (14) est connecté électriquement avec le ou les bloc(s) (18) de ladite i-ème ligne de la ou des colonne(s) électrochimique(s) (14) adjacente(s) par des premières connexions électriques de puissance (20) reliant en série respectivement les M éléments électrochimiques (12) dudit bloc (18) avec respectivement les M éléments électrochimiques (12) du ou des bloc(s) de la dite ligne de la ou des colonne(s) électrochimique(s) (14) adjacente(s).

## Description

La présente invention concerne un ensemble comprenant K colonnes d'éléments électrochimiques agencées latéralement les unes à côté des autres selon une direction transversale, K étant un entier naturel, chaque colonne s'étendant longitudinalement suivant une direction longitudinale, chaque colonne comprenant L blocs d'éléments électrochimiques agencés longitudinalement les uns à la suite des autres dans respectivement L ligne(s) d'éléments électrochimiques, L étant un entier naturel, chaque bloc d'éléments électrochimiques comprenant M éléments électrochimiques, M étant un entier naturel, les M éléments électrochimiques de chaque bloc d'éléments électrochimiques étant connectés électriquement entre eux en parallèle par des connexions électriques d'équilibrage.

On connaît de la demande de brevet EP 3 123 539 un ensemble comprenant plusieurs colonnes comportant des blocs d'éléments électrochimiques connectés électriquement en série entre eux, les colonnes étant elles-même connectées électriquement en série eutre elles.

De manière générale, les éléments électrochimiques des blocs d'éléments électrochimiques sont placées en rangées sur leur grande face. Ensuite, en fonction de la configuration souhaitée, les éléments électrochimiques de chaque bloc d'éléments électrochimiques sont connectés entre eux en parallèle, puis les blocs d'éléments électrochimiques sont connectés entre eux en série par des connexions de collecte et de transfert et enfin les colonnes sont connectées entre elles en série pour former des ensembles électrochimiques avec différentes configurations du type xPyS avec x et y des entiers naturels. Le chiffre x indique le nombre d'éléments électrochimiques connectés en parallèle et le chiffre y indique le nombre de bloc d'éléments connectés en série.

Cette structure présente plusieurs inconvénients. Certaines connexions d'alimentation des blocs d'éléments électrochimiques doivent être surdimensionnées dans le cas où x est supérieur à 1. Par exemple, pour un agencement 5P2S, en raison de la configuration 5P, les connexions d'alimentation des blocs d'éléments électrochimiques doivent être surdimensionnées pour cinq fois le courant qui parcourt chaque élément électrochimique du bloc d'éléments électrochimiques. En effet, les connexions d'alimentation doivent permettre le passage de la somme des courants parcourant chacun des éléments électrochimiques du bloc d'éléments électrochimiques. Lorsque ce surdimmensionnement n'est pas possible, par exemple pour des raisons d'encombrement, ces connexions d'alimentation présentent un échauffement important en cours d'utilisation.

Egalement, en cas de dysfonctionnement d'une cellule d'un bloc d'éléments électrochimiques, les cellules en parallèle de la cellule qui dysfonctionne peuvent subir un court-circuit externe. Le courant électrique de court-circuit circule alors dans les connexions d'alimentation qui, si elles sont surdimensionnées, sont incompatibles avec une fonction de fusible électrique dont le but serait d'isoler la cellule défaillante.

Un but de l'invention est de proposer un ensemble d'éléments électrochimiques simple à réaliser, tout en présentant un échauffement réduit en cours d'utilisation et dans lequel l'isolement d'un élément électrochimique défaillant est aisé.

A cet effet, l'invention a pour objet un ensemble du type précité, caractérisé en ce que les K x L blocs d'éléments électrochimiques sont connectés électriquement entre eux en série de la façon suivante :
pour chaque i-ème ligne, les blocs d'éléments électrochimiques de la i-ième ligne des K colonnes sont connectés électriquement entre eux en série, les blocs d'éléments électrochimiques de la i-ième ligne formant un i-ième groupe de blocs d'éléments électrochimiques de la i-ième ligne,
pour chaque i-ème ligne, chaque bloc d'éléments électrochimiques de ladite ligne des K colonnes étant connecté électriquement avec le ou les bloc(s) d'éléments électrochimiques de ladite i-ème ligne de la ou des colonne(s) électrochimique(s) adjacente(s) par des premières connexions électriques de puissance reliant en série respectivement les M éléments électrochimiques dudit bloc d'éléments électrochimiques avec respectivement les M éléments électrochimiques du ou des bloc(s) d'éléments électrochimiques de la dite ligne de la ou des colonne(s) électrochimique(s) adjacente(s).

Avec un tel agencement, les connexions électriques de puissance ne nécessitent pas d'être surdimensionnées pour permettre le passage d'un courant supérieur à celui qui est fourni par un seul élément électrochimique et qui s'échauffent moins que dans l'état de la technique. Les connexions électriques d'équilibrage assurent néanmoins un équilibrage électrique adéquat au sein de chaque bloc d'éléments électrochimiques en parallèle, en dissociant les courants électriques de puissance passant par les connexions électriques de puissance et les courants électriques d'équilibrage passant par les connexions électriques d'équilibrage.

En outre, grâce à cette configuration, il est possible d'isoler un élément électrochimique défaillant d'un bloc d'éléments électrochimiques, facilement et spontanément. Ceci est le cas sans avoir à isoler avec lui les autres éléments électrochimiques du même bloc d'éléments électrochimiques, grâce à la présence des connexions électriques d'équilibrage qui peuvent être sous-dimensionnées par rapport aux connexions électriques de puissance.

Suivant d'autres aspects avantageux de l'invention, l'ensemble comprend une ou plusieurs des caractéristiques suivantes, prises isolément ou suivant toutes les combinaisons techniquement possibles :
- chaque connexion électrique de puissance est réalisée par au moins un fil de matériau électriquement conducteur entre des bornes des éléments électrochimiques des blocs d'éléments électrochimiques adjacents le long de la i-ème ligne ;
- chaque connexion électrique d'équilibrage est dimensionnée pour recevoir un courant électrique d'équilibrage d'intensité maximale au moins cinq fois inférieure à l'intensité du courant électrique de fonctionnement délivré par l'ensemble ;
- la connexion électrique d'équilibrage est destinée à se rompre par fusion lorsqu'un courant d'intensité supérieure à l'intensité maximale parcourt la connexion électrique d'équilibrage ;
- pour chaque i-ème ligne, les connexions électriques d'équilibrage relient électriquement en parallèle chacun des M éléments électrochimiques de chaque bloc d'éléments électrochimiques de ladite ligne entre eux ;
- les connexions électriques d'équilibrage sont réalisées par au moins un fil de matériau électriquement conducteur entre des bornes des éléments électrochimiques des blocs d'éléments électrochimiques adjacents longitudinalement le long de chaque bloc d'éléments électrochimiques ;

- L est un entier naturel supérieur ou égal à 2, les L groupes de blocs d'éléments des L lignes étant connectés électriquement entre eux en série ;
- le premier groupe de blocs d'éléments électrochimiques de la première ligne est connecté électriquement en série au deuxième groupe de blocs d'éléments électrochimiques de la deuxième ligne par connexion électrique en série d'un dernier bloc d'éléments électrochimiques du premier groupe le long d'un premier bord latéral de l'ensemble avec un premier bloc d'éléments électrochimiques du deuxième groupe le long du premier bord latéral de l'ensemble ;
- pour j allant de 2 à L-1, le j-ième groupe de blocs d'éléments électrochimiques de la j-ième ligne est connecté électriquement en série :
   - au j-1-ième groupe de blocs d'éléments électrochimiques de la j-1-ième ligne par connexion électrique en série d'un premier bloc d'éléments électrochimiques du j-ième groupe le long du premier bord latéral de l'ensemble avec un dernier bloc (18) d'éléments électrochimiques du j-1-ième groupe le long du premier bord latéral de l'ensemble; et
   - au j+1-ième groupe de blocs d'éléments électrochimiques de la j+1-ième ligne par connexion électrique en série d'un dernier bloc d'éléments électrochimiques du j-ième groupe le long d'un deuxième bord latéral de l'ensemble, opposé au premier bord latéral de l'ensemble, avec un premier bloc d'éléments électrochimiques du j+1-ième groupe le long du deuxième bord latéral de l'ensemble;
- le L-ième groupe de blocs d'éléments électrochimiques de la L-ième ligne est connecté électriquement en série au L-1-ième groupe de blocs d'éléments électrochimiques de la L-1-ième ligne par connexion électrique en série :
   - d'un premier bloc d'éléments électrochimiques du L-ième groupe le long du premier bord latéral de l'ensemble avec un dernier bloc d'éléments électrochimiques du L-1-ième groupe le long du premier bord latéral de l'ensemble; ou
   - d'un premier bloc d'éléments électrochimiques du L-ième groupe le long du deuxième bord latéral de l'ensemble avec un dernier bloc d'éléments électrochimiques du L-1-ième groupe le long du deuxième bord latéral de l'ensemble.
- la connexion électrique entre un premier et un dernier bloc d'éléments électrochimiques le long du premier bord latéral de l'ensemble ou le long du deuxième bord latéral de l'ensemble sur deux lignes adjacentes est réalisée par une connexion électrique de transfert, les connexions électriques de transfert reliant électriquement les M éléments électrochimiques du premier bloc d'éléments électrochimiques avec les M éléments électrochimiques du dernier bloc d'éléments électrochimiques ;
- pour chacun du premier bloc et du dernier bloc les M éléments électrochimiques du bloc sont raccordés entre eux en parallèle par une connexion électrique de collecte s'étendant le long du premier bord latéral de l'ensemble ou le long du deuxième bord latéral de l'ensemble ;
- les connexions électriques de collecte ou/et les connexions électriques de transfert sont réalisées par au moins un fil de matériau électriquement conducteur ;
   - M est supérieur ou égal à 2, notamment égal à 5 ;
   - L est supérieur ou égal à 1, notamment égal à 3 ;
   - chaque élément électrochimique présente une forme sensiblement prismatique définissant deux grandes faces parallèles, chaque bloc d'éléments électrochimiques ayant une forme sensiblement parallélépipédique rectangle, les blocs d'éléments électrochimiques de chaque colonne étant disposés de sorte que des petites faces du parallélépipède de deux blocs d'éléments électrochimiques adjacents sont dirigées l'une vers l'autre et sont dans un plan perpendiculaire à la direction longitudinale, les éléments électrochimiques de chaque bloc d'éléments électrochimiques étant agencés de sorte que les grandes faces des prismes desdits éléments électrochimiques sont parallèles aux petites faces du parallélépipède du bloc d'éléments électrochimiques correspondant ;
   - il comprend en outre des bornes terminales destinées à fournir entre elles une puissance électrique, les bornes terminales étant connectées électriquement en série respectivement à un premier bloc et à un dernier bloc parmi les K x L blocs d'éléments électrochimiques connectés entre eux en série.
   - chaque colonne comprend un châssis s'étendant longitudinalement, les L blocs d'éléments électrochimiques étant agencés longitudinalement les uns à la suite des autres dans respectivement L lignes du châssis.

L'invention a aussi pour objet une batterie comprenant au moins un ensemble tel que défini plus haut.

L'invention apparaîtra plus clairement à la lecture de la description qui va suivre, donnée uniquement à titre d'exemple non limitatif, et faite en référence aux dessins dans lesquels :
La figure 1 est une vue partielle en perspective d'un premier ensemble selon l'invention, destiné à être placé dans une batterie, l'ensemble comprenant une pluralité de colonnes formées de blocs d'éléments électrochimiques, dans lequel la direction des lignes de courants électrique de puissance est transverse, la direction des lignes de courants d'équilibrage étant longitudinale ;
La figure 2 est une vue partielle en perspective du premier ensemble selon l'invention, illustrant les connexions électriques de puissance entre les blocs adjacents d'une ligne de blocs, les connexions électriques de collecte et de transfert de puissance, le long d'un bord latéral de l'ensemble et les connexions électriques d'équilibrage, entre les éléments électrochimiques successifs des colonnes, avec des connexions sous forme de fils métalliques ;
La figure 3 est une vue partielle en perspective d'un deuxième ensemble selon l'invention, dans lequel la connexion électrique de collecte et de transfert située le long du bord latéral pour connecter deux lignes de blocs adjacents en série est formée d'une barre métallique ;
La figure 4 est une vue partielle en perspective d'un troisième ensemble selon l'invention dans lequel la connexion électrique de puissance entre deux éléments électrochimiques adjacents de deux blocs adjacents transversalement est formée d'une languette métallique ;
La figure 5 est une vue partielle en perspective d'un quatrième ensemble selon l'invention dans lequel la connexion collecte et de transfert comporte des connecteurs décalés ;
La figure 6 est un schéma électrique d'une partie d'un ensemble selon l'invention, lors d'un évènement abusif se déroulant au sein d'un élément électrochimique d'un bloc.

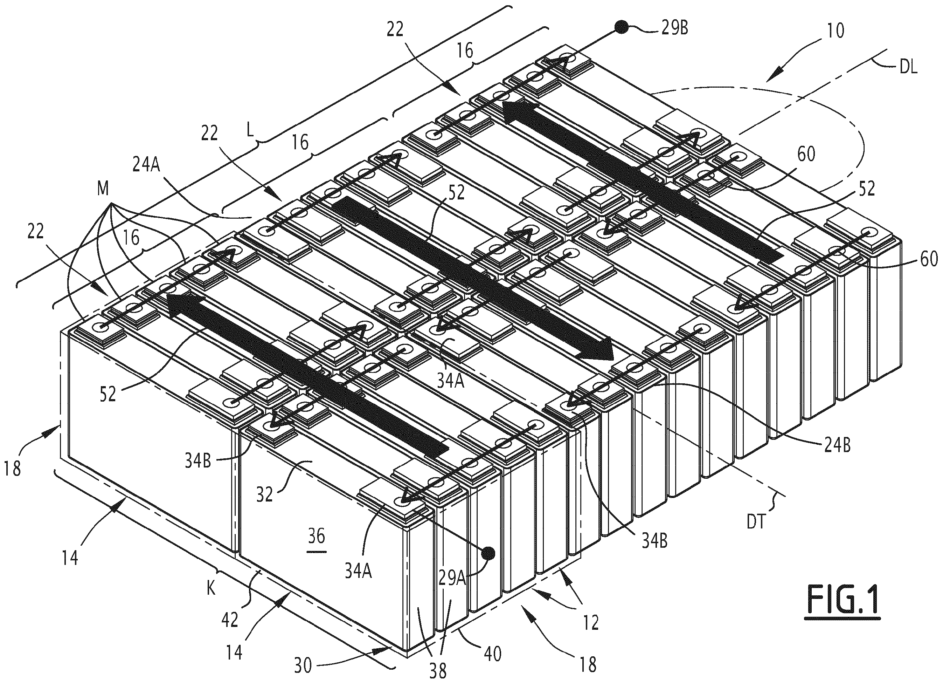

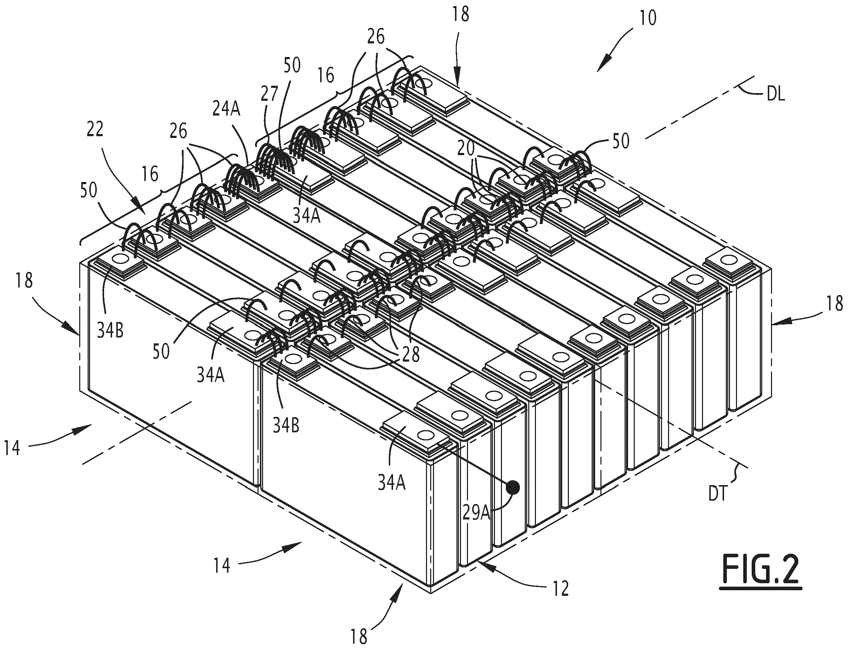

Les figures 1 et 2 illustrent un premier ensemble 10 d'éléments électrochimiques 12 selon l'invention, destiné à être reçu dans une batterie (non représentée).

La batterie comprend généralement au moins un ensemble 10, généralement plusieurs ensembles 10 disposés côte à côte ou/et l'un sur l'autre, et au moins un boitier (non représenté) contenant un ou plusieurs ensembles 10. Chaque boitier permet le support et le déplacement conjoint de tous les éléments électrochimiques 12 du ou de chaque ensemble 10 qu'il contient.

L'ensemble 10 illustré sur les figures 1 et 2 comporte K colonnes 14 agencées latéralement les unes à côté des autres selon une direction transversale DT de l'ensemble 10, K étant un entier naturel, chaque colonne 14 s'étendant longitudinalement suivant une direction longitudinale DL de l'ensemble 10.

Chaque colonne 14 comprend avantageusement un châssis (non représenté) s'étendant longitudinalement et L blocs 18 d'éléments électrochimiques 12 agencés les uns à la suite des autres suivant la direction longitudinale DL dans respectivement L lignes 16, L étant un entier naturel.

Chaque bloc 18 d'éléments électrochimiques 12 comprend M éléments électrochimiques 12 connectés en parallèle, M étant un entier naturel.

L'ensemble 10 comporte, pour i allant de 1 à L, des connexions électriques de puissance 20 (visibles sur la figure 2) pour raccorder en série les blocs 18 d'éléments électrochimiques 12 de la i-ième ligne 16 des K colonnes 14, les blocs 18 d'éléments électrochimiques 12 de la i-ième ligne 16 formant un i-ième groupe 22 de blocs 18 d'éléments électrochimiques 12 de la i-ième ligne.

L'ensemble 10 comporte en outre, le long des bords latéraux 24A, 24B de l'ensemble 10, des connexions électriques de collecte 26 (visibles sur la figure 2) pour collecter le courant électrique de puissance généré au sein de chaque groupe 22 de blocs 18 d'éléments électrochimiques 12 connectés électriquement entre eux en série sur une ligne 16, et des connexions électriques 27 de transfert (visibles sur la figure 2) pour transférer le courant électrique collecté par les connexions électriques de collecte 26 d'un groupe 22 de blocs d'éléments électrochimiques 12 sur une ligne 16 à un autre groupe 22 de blocs d'éléments électrochimiques 12 sur une autre ligne 16, de préférence adjacente longitudinalement.

Le terme « connexion électrique de collecte » désigne ici généralement une connexion électrique qui raccorde en parallèle les éléments électrochimiques 12 d'un bloc 18 situé le long d'un bord latéral 24A, 24B de l'ensemble 10 et qui collecte ainsi tous les courants électriques de puissance générés dans les alignements d'éléments électrochimiques 12 connectés en série des blocs 18 situés sur une même ligne 16.

Le terme « connexion électrique de transfert » désigne ici généralement une connexion électrique en série entre un groupe 22 de blocs d'éléments électrochimiques 12 sur une ligne 16 et un autre groupe 22 de blocs d'éléments électrochimiques 12 sur une autre ligne 16.

Dans l'exemple de la figure 2, les connexions électriques de collecte 26 sont réalisées par des éléments conducteurs séparés des éléments conducteurs réalisant les connexions électriques de transfert 27.

Dans d'autres exemples, qui seront décrits plus bas, les connexions électriques de collecte 26 et les connexions électriques de transfert 27 sont réalisées par un même élément conducteur.

L'ensemble 10 comporte enfin des connexions électriques 28 d'équilibrage (visibles sur la figure 2), pour connecter en parallèle les M éléments électrochimiques 12 de chaque bloc 18 d'éléments électrochimiques 12.

En référence à la figure 1, l'ensemble 10 comporte en outre des bornes terminales 29A, 29B, destinées à fournir entre elles une puissance électrique lors de la décharge de l'ensemble 10 ou à recevoir entre elles une puissance électrique lors de la recharge de l'ensemble 10.

Chaque borne terminale 29A, 29B est connectée électriquement en série respectivement à un premier bloc 18 et à un dernier bloc 18 parmi les K x L blocs 18 d'éléments électrochimiques 12, connectés entre eux en série dans l'ensemble 10.

Le terme « premier » et le terme « dernier » s'entendent ici et généralement dans tout ce qui suit, par rapport au sens de circulation d'un courant électrique de puissance électrique délivré par l'ensemble 10 entre les bornes terminales 29A, 29B.

Dans l'exemple illustré en particulier par la figure 1, le nombre K de colonnes est égal à 2, le nombre de lignes L est égal à 3 et le nombre M d'éléments électrochimiques 12 par bloc 18 est égal à 5.

Plus généralement, le nombre M d'éléments électrochimiques 12 par bloc 18 est supérieur ou égal à 2, notamment inférieur à 12. Le nombre de lignes L est supérieur ou égal à 1. Le nombre de colonnes K est supérieur à 2.

Comme visible sur la figure 2, chaque élément électrochimique 12 (« electrochemical cell » en anglais) est ici un élément prismatique comportant un conteneur 30 délimitant un volume intérieur comportant une alternance d'anodes, de séparateurs internes, et de cathodes et un électrolyte (non représentés). L'élément électrochimique 12 est par exemple de type lithium-ion ou de type à électrolyte alcalin.

L'élément électrochimique 12 comporte en outre un couvercle 32 fermant le volume intérieur et portant, de part et d'autre transversalement, une borne 34A de première polarité et une borne 34B de deuxième polarité.

Le conteneur 30 définit deux grandes faces 36 s'étendant dans un plan perpendiculaire à la direction longitudinale DL, et deux petites faces 38 s'étendant dans un plan perpendiculaire à la direction transversale DT.

Chaque bloc 18 d'éléments électrochimiques 12 présente M éléments électrochimiques 12 empilés longitudinalement. Chaque élément électrochimique 12 du bloc 18 présente une grande face 36, ou deux grandes faces 36 situées respectivement en regard et de préférence au contact d'une grande face 36 d'un élément électrochimique 12 adjacent longitudinalement du bloc 18.

Chaque bloc 18 d'éléments électrochimiques 12 présente une forme sensiblement parallélépipédique rectangle, avec des grandes faces 40 formées de la succession de petites faces 38 des éléments électrochimiques 12 du bloc 18 et avec des petites faces 42 formées des grandes faces 36 des éléments électrochimiques 12 situés aux extrémités longitudinales du bloc 18.

Les blocs 18 d'éléments électrochimiques 12 de chaque colonne 14 sont disposés avantageusement dans le châssis, de sorte que des petites faces 42 du parallélépipède de deux blocs 18 d'éléments électrochimiques 12 adjacents longitudinalement sont dirigées l'une vers l'autre et dans un plan perpendiculaire à la direction longitudinale DL

Les grandes faces 36 des éléments électrochimiques 12 sont parallèles aux petites faces 42 du parallélépipède du bloc 18 d'éléments électrochimiques 12 et perpendiculaires à la direction longitudinale DL.

Dans chaque ligne 16, au sein d'un groupe 22 de blocs 18, les M éléments électrochimiques 12 du bloc 18 sur une colonne 14 sont situés adjacents transversalement respectivement aux M éléments électrochimiques 12 du bloc 18 adjacent situé sur une colonne 14 adjacente.

Ainsi, les petites faces 38 des éléments électrochimiques 12 d'un bloc 18 sur une colonne 14 formant une grande face 40 du bloc 18, sont situées en regard et avantageusement au contact des petites faces 38 des éléments électrochimiques 12 formant la grande face 40 d'un bloc 18 adjacent transversalement sur une colonne 14 adjacente.

Ainsi, chaque groupe 22 de blocs 18 au sein de chaque ligne 16 comporte M alignements transversaux successifs d'éléments électrochimiques 18 adjacents transversalement.

Au sein de chaque bloc 18, les bornes de première polarité 34A sont situées d'un même côté des éléments électrochimiques 12 du bloc 18, de préférence en regard les unes des autres le long de la direction longitudinale DL. Les bornes de deuxième polarité 34B sont situées d'un même côté opposé des éléments électrochimiques 12 du bloc 18, de préférence en regard les unes des autres le long de la direction longitudinale DL.

Le long d'une ligne 16 au sein d'un groupe 22, les bornes de première polarité 34A d'un bloc 18 d'une colonne 14 sont situées adjacentes aux bornes de deuxième polarité 34B d'un bloc 18 adjacent transversalement sur une colonne adjacente 16.

De même, le long d'une colonne 14, les bornes de première polarité 34A d'un bloc 18 de la colonne 14 sont situées adjacentes aux bornes de deuxième polarité 34B d'un bloc 18 adjacent longitudinalement le long de la colonne 14.

En référence à la figure 2, chaque connexion électrique de puissance 20 raccorde en série un élément électrochimique 12 d'un bloc 18 d'une colonne 14 à un élément électrochimique 12 adjacent transversalement sur le même alignement transversal, l'élément électrochimique 12 adjacent faisant partie d'un bloc 18 adjacent transversalement sur une colonne 14 adjacente.

A cet effet, chaque connexion électrique de puissance 20 raccorde une borne de première polarité 34A sur l'élément électrochimique 12 du bloc 18 à une borne de deuxième polarité 34B sur le bloc 18 adjacent transversalement.

Dans l'exemple illustré par la figure 2, chaque connexion électrique de puissance 20 comporte au moins un fil 50 de matériau électriquement conducteur, avantageusement plusieurs fils 50 de matériau électriquement conducteur parallèles, notamment entre 2 et 8 fils 50.

Chaque fil 50 est formé exclusivement de matériau électriquement conducteur, sans comprendre de gaine isolante électriquement.

Le matériau électriquement conducteur est par exemple du cuivre, de l'aluminium, ou un alliage comprenant au moins du cuivre ou de l'aluminium.

Plus généralement, un matériau électriquement conducteur destiné à former le fil 50 présente une conductivité électrique avantageusement supérieure à 0.1 MS/cm.

Le fil 50 présente une épaisseur inférieure à 0,5 mm et notamment comprise entre 50 µm et 400 µm.

Il peut être fixé aux bornes 34A, 34B dans une opération de « câblage par fil » (ou « wire bonding » en anglais).

Le fil 50 est par exemple fixé par soudage, notamment par ultrasons, en chauffant localement le fil et/ou les bornes 34A, 34B et en le déployant entre les bornes 34A, 34B à l'aide d'une tête de déploiement du fil 50. Ceci est rapide, précis et minimise les contraintes mécaniques sur le fil 50 et les bornes 34A, 34B.

Les connexions électriques de puissance 20 successives en série des éléments électrochimiques 12 le long de chaque alignement transversal, dans chaque groupe 22 de blocs 18 d'éléments électrochimiques 12 correspondant aux lignes 16 successives, créent des segments transversaux de circulation 52 d'un courant électrique de puissance au sein de l'ensemble 10, visibles sur la figure 1, le long de la direction transversale DT.

Comme visible sur la figure 1, le segment transversal 52 dans un premier groupe 22 de blocs 18 d'éléments électrochimiques 12 le long d'une première ligne 16 est orienté dans un premier sens le long de la direction transversale DT, opposé au deuxième sens d'orientation du segment transversal 52 dans un deuxième groupe 22 de blocs 18 d'éléments électrochimiques 12 adjacent au premier groupe 22 le long d'une deuxième ligne 16.

Les connexions électriques de collecte et de transfert 26 sont situées le long des derniers blocs 18 ou des premiers blocs 18 de chaque groupe 22 de blocs 18 définissant les bords latéraux 24A, 24B de l'ensemble 10.

Dans chaque dernier bloc 18 ou dans chaque premier bloc 18 le long d'un bord latéral 24A, les bornes successives 34A, 34B en regard longitudinalement des M éléments électrochimiques 12 du bloc 18 sont raccordées les unes aux autres pour placer les M éléments électrochimiques 12 en parallèle et collecter les courants électrique de puissance engendrés dans chaque alignement transversal d'éléments électrochimiques 12, afin de transmettre le courant électrique de puissance résultant de la somme des courant électrique de puissance collectés à un groupe 22 de blocs 18 adjacents.

A cet effet, une connexion électrique de collecte 26 raccorde chaque borne 34A, 34B d'un élément électrochimique 12 à la borne 34A, 34B de même polarité de l'élément électrochimique 12 adjacent longitudinalement au sein du même bloc 18.

L'intensité du courant électrique de puissance collecté augmentant successivement en se déplaçant longitudinalement le long du bord latéral 24A vers le groupe 22 de blocs 18 adjacents auquel est transmis le courant électrique de puissance, l'intensité maximale supportée par chaque connexion électrique de collecte 26 augmente également le long du bord latéral 24A.

Dans l'exemple de la figure 2, chaque connexion électrique de collecte 26 comporte également au moins au moins un fil 50 de matériau électriquement conducteur.

Le nombre de fils 50 de chaque connexion électrique de collecte 26 augmente donc le long du bord latéral 24A, vers le groupe 22 de blocs 18 auquel le courant électrique de puissance est transféré afin d'accommoder l'intensité croissante du courant collecté.

Au contraire, dans le groupe 22 de blocs 18 auquel le courant électrique de puissance a été transféré, le nombre de fils 50 de chaque connexion électrique de collecte et de transfert 26 diminue le long du bord latéral 24A à l'écart du groupe de blocs ayant transmis le courant électrique de puissance.

Une telle disposition diminue le poids de l'ensemble 10, puisque chaque connexion électrique de collecte 26 est adaptée à l'intensité du courant électrique de puissance qu'elle reçoit.

Pour le raccordement en série des groupes 22 de blocs 18 des lignes 16 successives, une connexion électrique de transfert 27 raccorde en série le groupe 22 de blocs 18 d'éléments électrochimiques 12 de la première ligne 16 au deuxième groupe 22 de blocs 18 d'éléments électrochimiques 12 de la deuxième ligne 16, par connexion électrique en série d'un dernier bloc 18 d'éléments électrochimiques du premier groupe 22 le long du premier bord latéral 24A avec un premier bloc 18 d'éléments électrochimiques 12 du deuxième groupe 22 le long du premier bord latéral 24A de l'ensemble 10.

Pour chaque j-ième ligne 16 allant de 2 à L-1, au moins une connexion électrique de transfert 27 raccorde le j-ième groupe 22 de blocs 18 d'éléments électrochimiques de la j-ième ligne 16 en série :
- au j-1-ième groupe 22 de blocs 18 d'éléments électrochimiques 12 de la j-1-ième ligne 16 par connexion électrique en série d'une borne 34A, 34B d'un premier élément électrochimique 12 d'un premier bloc 18 d'éléments électrochimiques 12 du j-ième groupe 22 le long du premier bord latéral 24A de l'ensemble 10 avec une borne 34B, 34A de polarité opposée d'un dernier élément électrochimique 12 d'un dernier bloc 18 d'éléments électrochimiques 12 du j-1-ième groupe 22 le long du premier bord latéral 24A ; et
- au j+1-ième groupe 22 de blocs 18 d'éléments électrochimiques 22 de la j+1-ième ligne 16 par connexion électrique en série d'une borne 34A, 34B d'un dernier élément électrochimique 12 d'un dernier bloc 18 d'éléments électrochimiques 12 du j-ième groupe le long d'un deuxième bord latéral 24B de l'ensemble 10 opposé au premier bord latéral 24A de l'ensemble 10 avec une borne 34B, 34A de polarité opposée d'un premier élément électrochimique 12 d'un premier bloc 18 d'éléments électrochimiques 12 du j+1-ième groupe 22 le long du deuxième bord latéral 24B de l'ensemble 10.

Pour la L-ième ligne 16, au moins une connexion électrique de transfert 27 raccorde le L-ième groupe 22 de blocs 18 d'éléments électrochimiques 22 de la L-ième ligne 16 en série au L-1-ième groupe 22 de blocs 18 d'éléments électrochimiques 12 de la L-1-ième ligne 16.

Cette connexion électrique de transfert 27 connecte en série :
- une borne 34A, 34B d'un premier élément électrochimique 12 d'un premier bloc 18 d'éléments électrochimiques 12 du L-ième groupe 22 le long du premier bord latéral 24A de l'ensemble 10 avec une borne 34B, 34A de polarité opposée d'un dernier élément électrochimique 12 d'un dernier bloc 18 d'éléments électrochimiques 12 du L-1-ième groupe le long du premier bord latéral 24A de l'ensemble 10 ; ou
- une borne 34A, 34B d'un premier élément électrochimique 12 d'un premier bloc 18 d'éléments électrochimiques 12 du L-ième groupe le long du deuxième bord latéral 24B de l'ensemble avec une borne 34B, 34A de polarité opposée d'un dernier élément électrochimique 12 d'un dernier bloc 18 d'éléments électrochimiques du L-1-ième groupe 22 le long du deuxième bord latéral 24B de l'ensemble 10.

Dans l'exemple de la figure 2, chaque connexion électrique de transfert 27 comporte également au moins au moins un fil 50 de matériau électriquement conducteur, ici plusieurs fils 50.

Les connexions électriques de transfert 27 assurant le transfert de courant électrique de puissance entre les groupes 22 de blocs 18 successifs le long de la direction longitudinale DL reçoivent un courant électrique d'intensité maximale. Le nombre de fils 50 dans chaque connexion électrique de transfert 27 est donc avantageusement supérieur ou égal au nombre maximal de fils 50 dans chaque connexion électrique de collecte 26 au sein de chaque bloc 18.

Les connexions électriques de collecte 26 et les connexions électriques de transfert 27 assurent donc la collecte du courant électrique de puissance circulant le long des segments transversaux 52 et son transfert d'un segment transversal 52 à l'autre, alternativement le long du premier bord latéral 24A et le long du deuxième bord latéral 24B pour faire suivre au courant électrique de puissance un trajet en échelle rampante entre les bornes 29A, 29B de l'ensemble 10, comme visible sur la figure 1.

Pour chaque bloc 18 dans chaque ligne 16, les connexions électriques d'équilibrage 28 relient électriquement en parallèle chacun des M éléments électrochimiques 12 du bloc 18 entre eux.

Ainsi, au moins les bornes 34A d'une même polarité des M éléments électrochimiques 12 du bloc 18 sont reliées deux à deux longitudinalement par une connexion électrique d'équilibrage 28, en particulier en parallèle des connexions électriques de puissance 20 qui relient les bornes 34A d'une même polarité de chacun des M éléments électrochimiques 12 du bloc 18 aux bornes 34B de polarité opposée des M éléments électrochimiques 12 adjacents sur chaque alignement d'un bloc adjacent 18 sur la même ligne 16.

Les connexions électriques d'équilibrage 28 créent des chemins de circulation 60 des courants électriques d'équilibrage au sein de chaque bloc 18, qui s'étendent parallèlement à la direction longitudinale DL. Ces chemins 60 sont non parallèles aux segments de circulation 52 du courant électrique de puissance.

Avantageusement, comme illustré sur la figure 2, des connexions électriques d'équilibrage 28 relient également électriquement les bornes 34B de polarité opposée des M éléments électrochimiques 12 adjacents en parallèle.

Ceci assure une redondance de circulation des courants d'équilibrage de part et d'autres des connexions électriques de puissance 20 pour le cas où une défaillance d'une connexion électrique d'équilibrage 28 se produirait.

Ainsi, une capacité de mesure de la tension électrique aux bornes 34A, 34B de chaque élément électrochimique 12 est assurée de manière fiable.

Dans l'exemple de la figure 2, les connexions électriques d'équilibrage 28 sont réalisées par au moins un fil de matériau électriquement conducteur 50 tel que décrit plus haut.

Chaque connexion électrique d'équilibrage 28 est dimensionnée pour recevoir un courant électrique d'équilibrage d'intensité maximale au moins cinq fois inférieure à l'intensité du courant électrique de fonctionnement délivré par l'ensemble 10 entre les bornes terminales 29A, 29B.

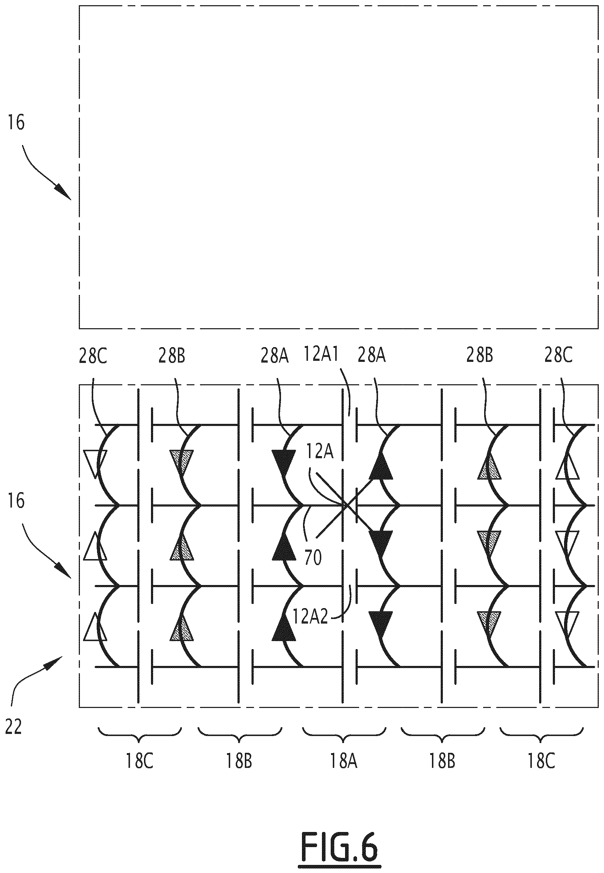

Ainsi, en cas d'augmentation significative du courant électrique d'équilibrage, par exemple résultant d'un évènement abusif au sein d'un élément électrochimique 12A (voir figure 6), la connexion électrique d'équilibrage 28 est configurée pour se rompre, notamment par fusion, pour isoler électriquement l'élément électrochimique 12A subissant l'évènement abusif des autres blocs 18 du même groupe 22, comme on le décrira plus bas.

Le fonctionnement de l'ensemble 10 lors de la délivrance d'une puissance électrique aux bornes terminales 29A, 29B va maintenant être décrit.

Un courant électrique de puissance est généré au sein de chaque alignement d'éléments électrochimiques 12 de chaque groupe 22 de blocs 18 au sein de chaque ligne 16. Le courant électrique de puissance circule transversalement d'un élément électrochimique 12 à l'autre à travers les connexions électriques de puissance 20. Les courants électriques de puissance sont alors collectés et cumulés par les connexions électriques de collecte 26, le long des bords latéraux 24A, 24B de l'ensemble 10.

Le courant électrique de puissance résultant est ensuite transmis d'un groupe 22 de blocs 18 le long d'une ligne 16 au groupe 22 de blocs 18 le long de la ligne 16 adjacente, par l'intermédiaire des connexions électriques de transfert 27. Le courant électrique de puissance suit donc un parcours en forme d'échelle rampante au sein de l'ensemble 10, comme illustré par la figure 1 (flèches 52).

Simultanément, des courants électriques d'équilibrage circulent longitudinalement entre les éléments électrochimiques 12 montés en parallèle au sein d'un même bloc 18 (flèches 60).

En référence à la figure 6, lorsqu'un élément électrochimique 12A au sein d'un bloc 18A le long d'une ligne 16 subit un évènement abusif, il devient équivalent à une résistance électrique créant un court-circuit 70 à travers lequel le courant électrique de puissance des éléments électrochimiques 12A1, 12A2 du bloc 18A circule, avec une intensité de court-circuit SC, en passant par les connexions électriques d'équilibrage 28A.

Cependant, les connexions électriques d'équilibrage 28A étant dimensionnées pour recevoir un courant électrique d'intensité maximale au moins cinq fois inférieure à l'intensité du courant électrique de fonctionnement délivré par l'ensemble 10, elles fonctionnent comme des fusibles qui se rompent et ouvrent les connexions électriques d'équilibrage 28A le long du bloc 18A.

Le courant électrique de court-circuit, avec une intensité réduite SC/5 se reporte alors dans les connexions électriques d'équilibrage 28B des blocs 18B adjacents sur la même ligne 16, provoquant éventuellement la rupture des connexions électriques d'équilibrage 28B si le courant SC/5 reste supérieur à l'intensité maximale supportée par les connexions électriques d'équilibrage 28B.

Puis, ce phénomène se reproduit dans les connexions électriques d'équilibrage 28C des blocs 18C adjacentes aux blocs 18B avec une intensité réduite SC/9, jusqu'à ce que l'intensité de court-circuit devienne inférieure à l'intensité maximale provoquant la rupture des connexions électriques d'équilibrage 28.

Cette réduction automatique des courants impliqués dans l'évènement abusif évite donc de provoquer un échauffement important des éléments électrochimiques 12 qui le subissent. Ceci empêche ou limite fortement le risque d'une propagation en chaine qui pourrait se produire dans une architecture classique de type xPyS, dans lequel les courants électrique de puissance circulant entre les éléments électrochimiques 12 ne sont pas dissociés des courant d'équilibrage des éléments électrochimiques.

La dissociation entre d'une part, les courants électriques de puissance qui suivent les segments transverses 52 le long des groupes 22 de blocs 18 à travers les connexions électriques de puissance 20, et à travers les connexions électriques de collecte 26 et de transmission 27, et d'autre part, les courants électriques d'équilibrage qui suivent les chemins de circulation longitudinaux 60 est donc très avantageuse.

Elle permet un dimensionnement adéquat des connexions électriques de collecte 26 en s'adaptant à l'intensité collectée, et une utilisation de connexions électriques d'équilibrage 28 de faibles sections, réduisant le poids et l'encombrement de l'ensemble 10. Ceci est permis tout en autorisant une mesure de tension fiable des blocs 18 d'éléments électrochimiques 12 en parallèle, en fonctionnement normal, tout en limitant l'intensité des courants électrique de court-circuit circulant dans l'élément électrochimique 12 subissant l'évènement abusif.

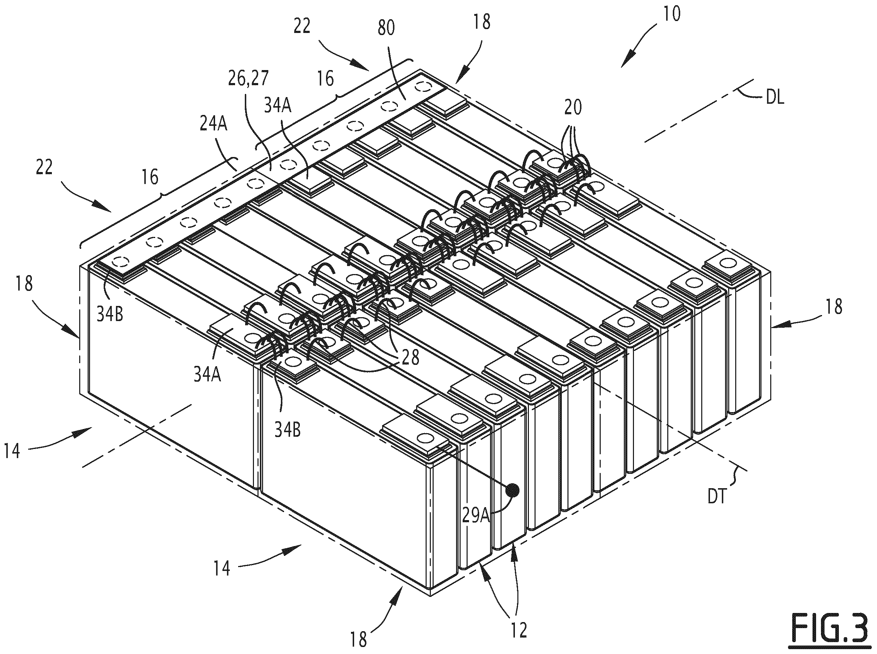

Le deuxième ensemble 10 selon l'invention, illustré sur la figure 3, diffère de celui illustré par la figure 2 par la réalisation des connexions électriques de collecte 26 et de la connexion électrique de transfert 27 entre deux groupes 22 de blocs 18 adjacents longitudinalement par une barre 80 en matériau conducteur unique, placée le long d'un bord latéral 24A, 24B.

La barre 80 est dimensionnée pour supporter, sur toute sa longueur, l'intensité maximale du courant électrique de puissance collecté dans l'un des groupes 22 de blocs 18 et transmis au groupe 22 de blocs 18 adjacent longitudinalement.

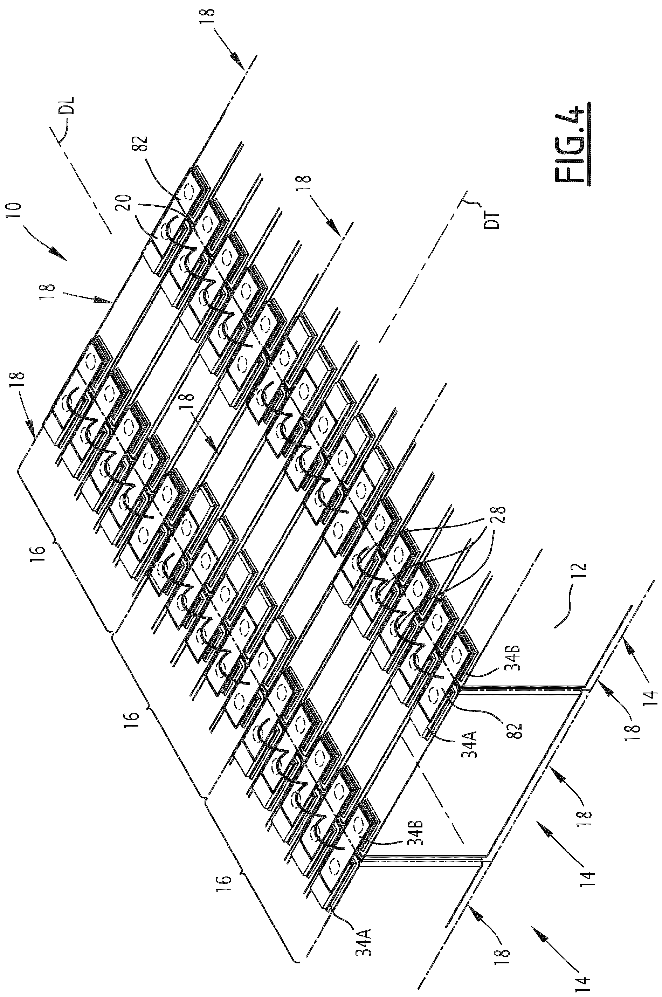

Le troisième ensemble 10 selon l'invention, illustré sur la figure 4, diffère de celui illustré par la figure 2 par la réalisation de chaque connexion électrique de puissance 20 sous forme d'une languette 82 en matériau conducteur raccordant les bornes de polarités opposées 34A, 34B de deux éléments électrochimiques 12 adjacents et dans un même alignement, entre deux blocs 18 d'un groupe 22 sur une même ligne 16.

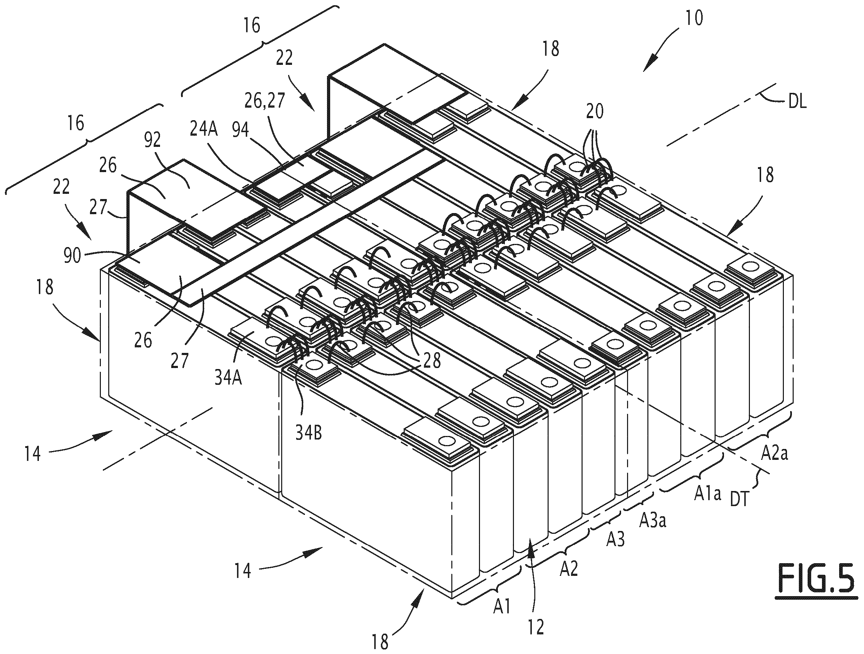

Le quatrième ensemble 10 selon l'invention, illustré sur la figure 5, diffère de celui illustré par la figure 2 en ce qu'il comprend le long de chaque bord latéral 24A, 24B, entre deux groupes 22 de blocs 18 adjacents longitudinalement, plusieurs connexions électriques de collecte et de transfert 26, 27 raccordant sélectivement certains alignements d'éléments électrochimiques 12 d'un groupe 22 de blocs 18 le long d'une ligne 16 avec certains alignements d'éléments électrochimiques 12 d'un groupe 22 de blocs 18 le long d'une ligne 16 adjacente.

Par exemple, un premier ensemble A1 parmi les alignements d'éléments électrochimiques 12 d'un groupe 22 de blocs 18 le long d'une ligne 16 sont raccordés à un premier ensemble A1a d'éléments électrochimiques 12 d'un groupe 22 adjacent de blocs 18 le long d'une ligne adjacente 16 par un premier peigne 90 de collecte et de transfert d'un courant électrique de puissance, sans être raccordés électriquement aux alignements A2, A3, A3a situés entre les alignements des premiers ensembles A1, A1a.

Un deuxième ensemble A2 parmi les alignements d'éléments électrochimiques 12 d'un groupe 22 de blocs 18 le long d'une ligne 16 sont raccordés à un deuxième ensemble A2a d'éléments électrochimiques 12 d'un groupe 22 adjacents de blocs 18 le long d'une ligne adjacente 16 par un deuxième peigne 92 de collecte et de transfert d'un courant électrique de puissance, sans être raccordés électriquement aux alignements A3, A3a, A1a situés entre les alignements des deuxièmes ensembles A2, A2a, notamment les alignements du premier ensemble A1a.

Les alignements A3 et A3a adjacents longitudinalement d'un groupe 22 de blocs 18 le long d'une ligne 16 et d'un groupe 22 adjacent de blocs 18 le long d'une ligne adjacente 16 sont reliés entre eux directement par une languette de connexion 94.

## Revendications

1. Ensemble (10) comprenant K colonnes (14) d'éléments électrochimiques (12) agencées latéralement les unes à côté des autres selon une direction transversale (DT), K étant un entier naturel, chaque colonne (14) s'étendant longitudinalement suivant une direction longitudinale (DL),
chaque colonne (14) comprenant L blocs (18) d'éléments électrochimiques (12) agencés longitudinalement les uns à la suite des autres dans respectivement L ligne(s) d'éléments électrochimiques, L étant un entier naturel,
chaque bloc (18) d'éléments électrochimiques (12) comprenant M éléments électrochimiques (12), M étant un entier naturel,
les M éléments électrochimiques (12) de chaque bloc (18) d'éléments électrochimiques (12) étant connectés électriquement entre eux en parallèle par des connexions électriques d'équilibrage (28),
**caractérisé en ce que** les Kx L blocs (18) d'éléments électrochimiques (12) sont connectés électriquement entre eux en série de la façon suivante :
pour chaque i-ème ligne, les blocs (18) d'éléments électrochimiques (12) de la i-ième ligne des K colonnes (14) sont connectés électriquement entre eux en série, les blocs (18) d'éléments électrochimiques (12) de la i-ième ligne formant un i-ième groupe (22) de blocs (18) d'éléments électrochimiques (12) de la i-ième ligne,
pour chaque i-ème ligne, chaque bloc (18) d'éléments électrochimiques (12) de ladite ligne des K colonnes (14) étant connecté électriquement avec le ou les bloc(s) d'éléments électrochimiques (12) de ladite i-ème ligne de la ou des colonne(s) électrochimique(s) (14) adjacente(s) par des premières connexions électriques de puissance (20) reliant en série respectivement les M éléments électrochimiques (12) dudit bloc (18) d'éléments électrochimiques (12) avec respectivement les M éléments électrochimiques (12) du ou des bloc(s) d'éléments électrochimiques (12) de la dite ligne de la ou des colonne(s) électrochimique(s) (14) adjacente(s).

2. Ensemble (10) selon la revendication 1, dans lequel chaque connexion électrique de puissance (20) est réalisée par au moins un fil de matériau électriquement conducteur entre des bornes (34A, 34B) des éléments électrochimiques (12) des blocs (18) d'éléments électrochimiques (12) adjacents le long de la i-ème ligne.

3. Ensemble (10) selon la revendication 1 ou 2, dans lequel chaque connexion électrique d'équilibrage (28) est dimensionnée pour recevoir un courant électrique d'équilibrage d'intensité maximale au moins cinq fois inférieure à l'intensité du courant électrique de fonctionnement délivré par l'ensemble (10).

4. Ensemble (10) selon la revendication 3, dans lequel la connexion électrique d'équilibrage (28) est destinée à se rompre par fusion lorsqu'un courant d'intensité supérieure à l'intensité maximale parcourt la connexion électrique d'équilibrage (28).

5. Ensemble (10) selon l'une quelconque des revendications précédentes, dans lequel pour chaque i-ème ligne, les connexions électriques d'équilibrage (28) relient électriquement en parallèle chacun des M éléments électrochimiques (12) de chaque bloc (18) d'éléments électrochimiques (12) de ladite ligne entre eux.

6. Ensemble (10) selon l'une quelconque des revendications précédentes, dans lequel les connexions électriques d'équilibrage (28) sont réalisées par au moins un fil de matériau électriquement conducteur entre des bornes (34A, 34B) des éléments électrochimiques (12) des blocs (18) d'éléments électrochimiques (12) adjacents longitudinalement le long de chaque bloc (18) d'éléments électrochimiques (12).

7. Ensemble (10) selon l'une quelconque des revendications précédentes, dans lequel L est un entier naturel supérieur ou égal à 2, les L groupes (22) de blocs (18) d'éléments des L lignes étant connectés électriquement entre eux en série,

8. Ensemble (10) selon la revendication 7, dans lequel :
- le premier groupe (22) de blocs (18) d'éléments électrochimiques (12) de la première ligne est connecté électriquement en série au deuxième groupe (22) de blocs (18) d'éléments électrochimiques (12) de la deuxième ligne par connexion électrique en série d'un dernier bloc (18) d'éléments électrochimiques (12) du premier groupe (22) le long d'un premier bord latéral (24A) de l'ensemble (10) avec un premier bloc (18) d'éléments électrochimiques (12) du deuxième groupe le long du premier bord latéral (24A) de l'ensemble (10) ;
- pour j allant de 2 à L-1, le j-ième groupe (22) de blocs (18) d'éléments électrochimiques (12) de la j-ième ligne est connecté électriquement en série :
- au j-1-ième groupe (22) de blocs (18) d'éléments électrochimiques (12) de la j-1-ième ligne par connexion électrique en série d'un premier bloc (18) d'éléments électrochimiques (12) du j-ième groupe le long du premier bord latéral (24A) de l'ensemble (10) avec un dernier bloc (18) d'éléments électrochimiques (12) du j-1-ième groupe (22) le long du premier bord latéral (24A) de l'ensemble (10) ; et
- au j+1-ième groupe (22) de blocs (18) d'éléments électrochimiques (12) de la j+1-ième ligne par connexion électrique en série d'un dernier bloc (18) d'éléments électrochimiques (12) du j-ième groupe le long d'un deuxième bord latéral (24B) de l'ensemble (10), opposé au premier bord latéral (24A) de l'ensemble (10), avec un premier bloc (18) d'éléments électrochimiques (12) du j+1-ième groupe le long du deuxième bord latéral (24B) de l'ensemble (10) ;
- le L-ième groupe (22) de blocs (18) d'éléments électrochimiques (12) de la L-ième ligne est connecté électriquement en série au L-1-ième groupe (22) de blocs (18) d'éléments électrochimiques (12) de la L-1-ième ligne par connexion électrique en série :
- d'un premier bloc (18) d'éléments électrochimiques (12) du L-ième groupe le long du premier bord latéral (24A) de l'ensemble (10) avec un dernier bloc (18) d'éléments électrochimiques (12) du L-1-ième groupe le long du premier bord latéral (24A) de l'ensemble (10) ; ou
- d'un premier bloc (18) d'éléments électrochimiques (12) du L-ième groupe le long du deuxième bord latéral (24B) de l'ensemble (10) avec un dernier bloc (18) d'éléments électrochimiques (12) du L-1-ième groupe le long du deuxième bord latéral (24B) de l'ensemble (10).

9. Ensemble (10) selon la revendication 8, dans lequel la connexion électrique entre un premier et un dernier bloc (18) d'éléments électrochimiques (12) le long du premier bord latéral (24A) de l'ensemble (10) ou le long du deuxième bord latéral (24B) de l'ensemble (10) sur deux lignes adjacentes est réalisée par une connexion électrique de transfert (27), les connexions électriques de transfert (27) reliant électriquement les M éléments électrochimiques (12) du premier bloc (18) d'éléments électrochimiques (12) avec les M éléments électrochimiques (12) du dernier bloc (18) d'éléments électrochimiques (12).

10. Ensemble (10) selon la revendication 9, dans lequel, pour chacun du premier bloc (18) et du dernier bloc (18) les M éléments électrochimiques (12) du bloc (18) sont raccordés entre eux en parallèle par une connexion électrique de collecte (26) s'étendant le long du premier bord latéral (24A) de l'ensemble (10) ou le long du deuxième bord latéral (24B) de l'ensemble (10).

11. Ensemble (10) selon la revendication 9 ou 10, dans lequel les connexions électriques de collecte (27) ou/et les connexions électriques de transfert (26) sont réalisées par au moins un fil de matériau électriquement conducteur.

12. Ensemble (10) selon l'une quelconque des revendications précédentes, dans lequel M est supérieur ou égal à 2, notamment égal à 5.

13. Ensemble (10) selon l'une quelconque des revendications précédentes, dans lequel L est supérieur ou égal à 1, notamment égal à 3.

14. Ensemble (10) selon l'une quelconque des revendications précédentes, dans lequel chaque élément électrochimique (12) présente une forme sensiblement prismatique définissant deux grandes faces parallèles (36), chaque bloc (18) d'éléments électrochimiques (12) ayant une forme sensiblement parallélépipédique rectangle, les blocs (18) d'éléments électrochimiques (12) de chaque colonne (14) étant disposés de sorte que des petites faces (42) du parallélépipède de deux blocs (18) d'éléments électrochimiques (12) adjacents sont dirigées l'une vers l'autre et sont dans un plan perpendiculaire à la direction longitudinale (DL), les éléments électrochimiques (12) de chaque bloc (18) d'éléments électrochimiques (12) étant agencés de sorte que les grandes faces (36) des prismes desdits éléments électrochimiques (12) sont parallèles aux petites faces (42) du parallélépipède du bloc (18) d'éléments électrochimiques (12) correspondant.

15. Ensemble (10) selon l'une quelconque des revendications précédentes, comprenant en outre des bornes terminales (29A, 29B) destinées à fournir entre elles une puissance électrique, les bornes terminales (29A, 29B) étant connectées électriquement en série respectivement à un premier bloc (18) et à un dernier bloc (18) parmi les K x L blocs (18) d'éléments électrochimiques (12) connectés entre eux en série.

16. Batterie, comprenant au moins un ensemble (10) selon l'une quelconque des revendications précédentes.
